# EUROPÄISCHE PATENTSCHRIFT

(11) **EP 3 302 910 B1**
(45) Veröffentlichungstag und Bekanntmachung des Hinweises auf die Patenterteilung: **30.10.2019**
(21) Anmeldenummer: 16736361.3
(22) Anmeldetag: 01.06.2016
(51) Int. Cl.: B29B 17/00, B02C 18/14, B02C 18/22, B29C 48/36, B29C 48/38, B29C 48/10

(54) **AUFBEREITUNGSANLAGE FÜR KUNSTSTOFFMATERIAL**
TREATMENT SYSTEM FOR PLASTIC MATERIAL
DISPOSITIF DE PRÉPARATION POUR MATIÈRE PLASTIQUE

(30) Priorität: 03.06.2015 AT 504512015
(43) Veröffentlichungstag der Anmeldung: 11.04.2018
(73) Patentinhaber: Next Generation Recyclingmaschinen GmbH, 4101 Feldkirchen an der Donau (AT)
(72) Erfinder: BRZEZOWSKY, Klaus, 4614 Marchtrenk (AT); GRUBER, Klemens, 4261 Rainbach (AT); PICHLER, Thomas, 4171 St. Peter am Wimberg (AT)
(74) Vertreter: Burger, Hannes
(86) Internationale Anmeldenummer: PCT/AT2016/050170
(87) Internationale Veröffentlichungsnummer: WO 2016/191784

(56) Entgegenhaltungen:
- EP-A1- 2 689 908
- DE-A1- 10 140 215
- DE-B- 1 271 973

## Beschreibung

Die Erfindung betrifft eine Aufbereitungsanlage für Kunststoffmaterial, insbesondere zur Aufbereitung von thermoplastischem Kunststoffmaterial für dessen Wiederverwertung, wie diese im Anspruch 1 beschrieben ist.

Aus der WO 98/16360 A1 sowie der daraus hervorgegangenen EP 0 934 144 B1 sind jeweils eine gattungsgemäß ausgebildete Aufbereitungsvorrichtung zum Zerkleinern, Fördern und anschließendem Plastifizieren von thermoplastischem Kunststoffmaterial bekannt geworden. Diese Aufbereitungsvorrichtung umfasst eine Zufuhrvorrichtung, eine Aufbereitungseinheit und eine daran anschließende Plastifiziervorrichtung. Die Aufbereitungseinheit umfasst ihrerseits eine Zerkleinerungsvorrichtung, eine schneckenförmig ausgebildete Fördervorrichtung, ein rohrförmig ausgebildetes Gehäuse sowie zumindest ein Antriebsmittel für die Zerkleinerungsvorrichtung und die Fördervorrichtung. Die Zerkleinerungsvorrichtung und die an die Zerkleinerungsvorrichtung daran anschließende schneckenförmige Fördervorrichtung sind in dem rohrförmig ausgebildeten Gehäuse aufgenommen sowie drehbar gelagert. Weiters definiert die Fördervorrichtung einen ersten Förderabschnitt mit einer ersten Längsachse. Das rohrförmige Gehäuse weist im Bereich der Zerkleinerungsvorrichtung zumindest eine hin zur Zufuhrvorrichtung geöffnete Zufuhröffnung und in einem Endbereich des ersten Förderabschnitts der Fördervorrichtung eine bodenseitig angeordnete Austrittsöffnung auf. Die Plastifiziervorrichtung umfasst ihrerseits eine in einem Extrudergehäuse aufgenommene Extruderschnecke sowie ein weiteres Antriebsmittel dafür. Die Extruderschnecke weist einen weiteren Förderabschnitt auf und definiert in diesem eine weitere Längsachse. Im Extrudergehäuse ist eine Einfüllöffnung angeordnet, wobei die Einfüllöffnung und die im rohrförmigen Gehäuse angeordnete Austrittsöffnung unmittelbar aneinander anschließend angeordnet sind. Die erste Längsachse der Fördervorrichtung und die weitere Längsachse der Extruderschnecke sind im Bereich der Austrittsöffnung und der Einfüllöffnung bezüglich einer Projektion auf eine Horizontalebene zueinander kreuzend unter einem Winkel von 90° angeordnet. Die Umlaufrichtung der Aufbereitungseinheit ist an der Austrittsöffnung übereinstimmend mit der Förderrichtung der Extruderschnecke gewählt.

Aus der DE 101 40 215 A1 ist eine Vorrichtung zur Aufbereitung von Kunststoffen bekannt geworden. Der aufzubereitende Kunststoff wird dabei über eine Einfüllöffnung in einen Behälter eines Schneidverdichters eingefüllt und dort von einem an einer Trägerscheibe angeordneten Schneid- und Rührwerk zerkleinert. Das zerkleinerte Kunststoffmaterial gelangt durch eine im Bodenbereich des Schneidverdichters befindliche Austrittsöffnung in eine Eintrittsöffnung einer Mischvorrichtung mit einem darin angeordneten Förderschneckenpaar. Die Mischvorrichtung weist ein eigenes Gehäuse auf, welches beheizbar ausgebildet ist und damit das zerkleinerte Kunststoffmaterial erweicht wird. Die Förderschnecken sind horizontal sowie parallel nebeneinander angeordnet und gegenläufig angetrieben. Das Gehäuse der Mischvorrichtung ist tangential bezüglich des stehenden Gehäuses des Schneidverdichters dazu angeordnet. Das Kunststoffmaterial wird in der Mischvorrichtung von den Förderschnecken weitgehend homogen gemischt und von den Förderschnecken über eine Ausgangsöffnung einer nachfolgend angeordneten Siebstation zugfördert, welche dann vom bereits erweichten Kunststoffmaterial durchlaufen wird. Die Siebstation ist zwischen einer Austrittsöffnung aus dem Gehäuse der Mischvorrichtung und einer Eintrittsöffnung im Gehäuse des Schneckenextruders angeordnet. In der Siebstation werden grobe Bestandteile des durch die Erwärmung schon plastifizierten Kunststoffmaterials abgesondert. Nach dem Durchtritt durch die Siebstation wird das Kunststoffmaterial in das Gehäuse des Schneckenextruders gefördert.

Eine ähnliche, gattungsgemäß ausgebildete Aufbereitungsvorrichtung ist aus der EP 1 918 084 B1 bekannt geworden, welche auf die geometrische Ausbildung des Übergabebereichs zwischen der Fördervorrichtung und der Extruderschnecke gerichtet ist. Auch hier sind wiederum die erste Längsachse der Fördervorrichtung und die weitere Längsachse der Extruderschnecke im Übergangsbereich zwischen der Austrittsöffnung und der Einfüllöffnung bezüglich einer Projektion auf eine Horizontalebene zueinander kreuzend unter einem Winkel von 90° oder unter einem davon abweichenden Winkel zueinander angeordnet. Die Umlaufrichtung der Aufbereitungseinheit ist an der Austrittsöffnung übereinstimmend mit der Förderrichtung der Extruderschnecke gewählt.

Diese beiden bekannten Aufbereitungsvorrichtungen haben sich in Praxisbetrieb recht gut bewährt, wobei jedoch nicht in allen Betriebsfällen eine gleichmäßige Übergabe des zerkleinerten Kunststoffmaterials an die Plastifiziervorrichtung erreicht werden konnte. In Einzelfällen konnten sich im Übergabebereich des zerkleinerten Kunststoffmaterials zwischen der Austrittsöffnung aus dem Bereich der Fördervorrichtung und der Einfüllöffnung in die Plastifiziervorrichtung Kunststoffstückchen ansammeln, was zu einer Verkleinerung der Öffnungen bis hin zu einem Verstopfen derselben führen konnte.

Der vorliegenden Erfindung liegt die Aufgabe zugrunde, die Übergabe des zerkleinerten Kunststoffmaterials von der Fördervorrichtung hin zur Plastifiziervorrichtung gleichmäßiger und noch konstanter zu gestalten, um so einen während des Betriebs gleichmäßigeren Füllgrad der Extruderschnecke der Plastifiziervorrichtung zu erzielen.

Diese Aufgabe der Erfindung wird dadurch gelöst, dass die schneckenförmig ausgebildete Fördervorrichtung im Bereich der Austrittsöffnung aus dem Gehäuse eine Umlaufrichtung aufweist, welche bezüglich der Förderrichtung der zumindest einen Extruderschnecke in dazu entgegengesetzter Richtung verläuft.

Der dadurch erzielte Vorteil liegt darin, dass es damit im Übergabebereich des zerkleinerten Kunststoffmaterials von der Fördervorrichtung hin zur Extruderschnecke zu keinem Hineinstopfen kommen kann. Durch die in entgegengesetzter Richtung bzw. in gegensinniger Richtung gewählten Bewegungsabläufe zwischen den sich einander kreuzend angeordneten Förderabschnitten der Fördervorrichtung sowie der Extruderschnecke kann so im Endbereich des Förderabschnitts entweder vom schneckenförmigen Förderwendel und/oder von zusätzlichen über den zentralen Wellenkörper vorragende Fortsätze das nicht mehr von der Extruderschnecke aufgenommene Kunststoffstückgut abgestreift und in einen nachfolgenden Freiraum der Extruderschnecke hinein befördert werden. Damit kann eine Überfüllung der Extruderschnecke und sowie ein damit einhergehendes Verstopfen derselben besser und leichter verhindert werden. So kann ein gleichmäßigerer und sicherer Abtransport des in der Extruderschnecke aufzunehmenden und späterhin aufzuschmelzenden Kunststoffstückgut in diesem Übergabebereich geschaffen werden.

Eine andere Ausführungsform zeichnet sich dadurch aus, dass die Zerkleinerungsvorrichtung und die Fördervorrichtung an einer gemeinsamen Aufbereitertrommel angeordnet oder ausgebildet sind. Damit kann mit einem einzigen Antriebsmotor das Auslangen gefunden werden. Darüber hinaus kann so aber auch die Lagerung der Zerkleinerungsvorrichtung und der Fördervorrichtung einfacher und kostengünstiger gestaltet werden.

Eine weitere Ausbildung sieht vor, dass bezüglich einer Projektion auf eine Horizontalebene ein zwischen der ersten Längsachse des ersten Förderabschnitts der Fördervorrichtung und der weiteren Längsachse des weiteren Förderabschnitts der Extruderschnecke eingeschlossener Winkel gleich dem rechten Winkel gewählt ist. Damit wird eine platzsparende gegenseitige Anordnung zwischen der Aufbereitungseinheit und der Plastifiziervorrichtung geschaffen. Darüber hinaus kann so aber weiters auch unabhängig von der Steigungsrichtung der beiden Förderabschnitte ein gleichmäßiger Übergabevorgang des Kunststoffmaterials erzielt werden.

Weiters ist es vorteilhaft, wenn bezüglich einer Projektion auf eine Horizontalebene ein zwischen der ersten Längsachse des ersten Förderabschnitts der Fördervorrichtung und der weiteren Längsachse des weiteren Förderabschnitts der Extruderschnecke eingeschlossener Winkel ungleich dem rechten Winkel gewählt ist. Durch die Abweichung der gegenseitigen Ausrichtung der beiden Längsachsen vom rechten Winkel kann so einfach auf unterschiedliche Anlagenanordnungen zueinander Rücksicht genommen werden. Darüber hinaus kann so in Abhängigkeit von der jeweils gewählten Steigungsrichtung eine noch gleichmäßigere und konstantere Übergabe des Kunststoffstückguts erzielt werden.

Eine andere Ausführungsform zeichnet sich dadurch aus, dass bezüglich einer Projektion auf eine Horizontalebene ein zwischen der ersten Längsachse des ersten Förderabschnitts der Fördervorrichtung und der weiteren Längsachse des weiteren Förderabschnitts der Extruderschnecke eingeschlossener Winkel ein spitzer Winkel ist. Damit kann der Platzbedarf für die Aufbereitungsanlage noch geringer gehalten werden. Darüber hinaus kann damit aber auch in Abhängigkeit von der Steigungsrichtung der beiden Förderabschnitte das Ausmaß des Übergabevolumens an Kunststoffstückgut festgelegt werden.

Eine weitere mögliche Ausführungsform hat die Merkmale, dass bezüglich einer Projektion auf eine Horizontalebene ein zwischen der ersten Längsachse des ersten Förderabschnitts der Fördervorrichtung und der weiteren Längsachse des weiteren Förderabschnitts der Extruderschnecke eingeschlossener Winkel ein stumpfer Winkel ist. Dadurch wird es möglich, einfacher an nachfolgend an die Plastifiziervorrichtung anschließende Anlagenteile anschließen zu können. Damit kann in weiterer Folge eine flexiblere Anordnung und Aufstellung der Aufbereitungsanlage in Bezug zu anderen Anlageteilen erfolgen.

Eine weitere Ausbildung sieht vor, dass die erste Längsachse im Bereich des ersten Förderabschnitts der Fördervorrichtung und die weitere Längsachse im Bereich des weiteren Förderabschnitts der zumindest einen Extruderschnecke jeweils in einer Horizontalebene verlaufend angeordnet sind. Durch die zueinander parallele Anordnung der beiden Förderabschnitte von Fördervorrichtung und Extruderschnecke zueinander, kann so eine einfache und kostengünstigere Herstellung sowie ein konstanter, gleichmäßiger Weitertransport des zerkleinerten Stückguts aus Kunststoffmaterial erzielt werden.

Eine andere Ausführungsform zeichnet sich dadurch aus, dass die erste Längsachse im Bereich des ersten Förderabschnitts der Fördervorrichtung in deren Förderrichtung gesehen abfallend hin zur zumindest einen Extruderschnecke der Plastifiziervorrichtung ausgerichtet ist. Durch die geneigt abfallend angeordnete Fördervorrichtung kann so eine bessere Förderwirkung hin zur Plastifiziervorrichtung erzielt werden. Weiters können damit aber auch kleinere und kleinste Kunststoffpartikel, welche sich zumeist im Bodenbereich des Gehäuses ablagern können, ebenfalls einfacher hin zur Plastifiziervorrichtung transportiert werden.

Eine weitere bevorzugte Ausführungsform ist dadurch gekennzeichnet, dass die schneckenförmig ausgebildete Fördervorrichtung eine rechtsgängige Steigung und die zumindest eine Extruderschnecke ebenfalls eine rechtsgängige Steigung aufweist und sowohl die Fördervorrichtung als auch die Extruderschnecke jeweils in deren Förderrichtung gesehen entgegen dem Uhrzeigersinn angetrieben sind. Damit kann in Abhängigkeit von der bezüglich der Förderrichtung dazu entgegengesetzt verlaufenden Umlaufrichtung der Fördervorrichtung die Ausrichtung der Plastifiziervorrichtung für die entsprechende Aufstellung leichter festgelegt werden.

Weiters ist es vorteilhaft, wenn die schneckenförmig ausgebildete Fördervorrichtung eine linksgängige Steigung und die zumindest eine Extruderschnecke ebenfalls eine linksgängige Steigung aufweist und sowohl die Fördervorrichtung als auch die Extruderschnecke jeweils in deren Förderrichtung gesehen im Uhrzeigersinn angetrieben sind. Dadurch kann auch beim Einsatz von linksgängigen Steigungsrichtungen und Beibehaltung der entgegengesetzten Umlaufrichtung bezüglich der Förderrichtung eine entgegengesetzt gerichtete Ausrichtung bezüglich der Aufstellung der Plastifiziervorrichtung erzielt werden.

Eine andere Ausführungsform zeichnet sich dadurch aus, dass die schneckenförmig ausgebildete Fördervorrichtung eine rechtsgängige Steigung und die zumindest eine Extruderschnecke eine linksgängige Steigung aufweist und die Fördervorrichtung in deren Förderrichtung gesehen entgegen dem Uhrzeigersinn und die Extruderschnecke in deren Förderrichtung gesehen im Uhrzeigersinn angetrieben ist oder dass die schneckenförmig ausgebildete Fördervorrichtung eine linksgängige Steigung und die zumindest eine Extruderschnecke eine rechtsgängige Steigung aufweist und die Fördervorrichtung in deren Förderrichtung gesehen im Uhrzeigersinn und die Extruderschnecke in deren Förderrichtung gesehen entgegen dem Uhrzeigersinn angetrieben ist. Damit kann auch bei zueinander unterschiedlich gewählten Steigungsrichtungen der beiden Förderabschnitte und entsprechend gewähltem Umlaufsinn stets bei unterschiedlicher Erstreckungsrichtung der Plastifiziervorrichtung die entgegengesetzte Umlaufrichtung bezüglich der Förderrichtung der Extruderschnecke eingehalten werden.

Zum besseren Verständnis der Erfindung wird diese anhand der nachfolgenden Figuren näher erläutert.

Es zeigen jeweils in stark vereinfachter, schematischer Darstellung:
- Fig. 1: einen Teilausschnitt einer Aufbereitungsanlage in einem axialen Vertikalschnitt durch die Aufbereitungseinheit;
- Fig. 2: einen Radialschnitt durch die Fördervorrichtung der Aufbereitungseinheit im Übergabebereich zur Extruderschnecke der Plastifiziervorrichtung, gemäß den Linien II-II in Fig. 1;
- Fig. 3: ein Schemabild einer möglichen ersten Anordnung und Ausbildung der Fördervorrichtung und der Extruderschnecke, in Draufsicht;
- Fig. 4: ein weiteres Schemabild einer möglichen zweiten Anordnung und Ausbildung der Fördervorrichtung und der Extruderschnecke, in Draufsicht;
- Fig. 5: ein anderes Schemabild einer möglichen dritten Anordnung und Ausbildung der Fördervorrichtung und der Extruderschnecke, in Draufsicht;
- Fig. 6: ein weiteres Schemabild einer möglichen vierten Anordnung und Ausbildung der Fördervorrichtung und der Extruderschnecke, in Draufsicht;
- Fig. 7: ein Schemabild einer einen spitzen Winkel einschließenden Anordnung der Fördervorrichtung und der Extruderschnecke, in Draufsicht;
- Fig. 8: ein Schemabild einer einen stumpfen Winkel einschließenden Anordnung der Fördervorrichtung und der Extruderschnecke, in Draufsicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine Vorgehensweise darstellen muss.

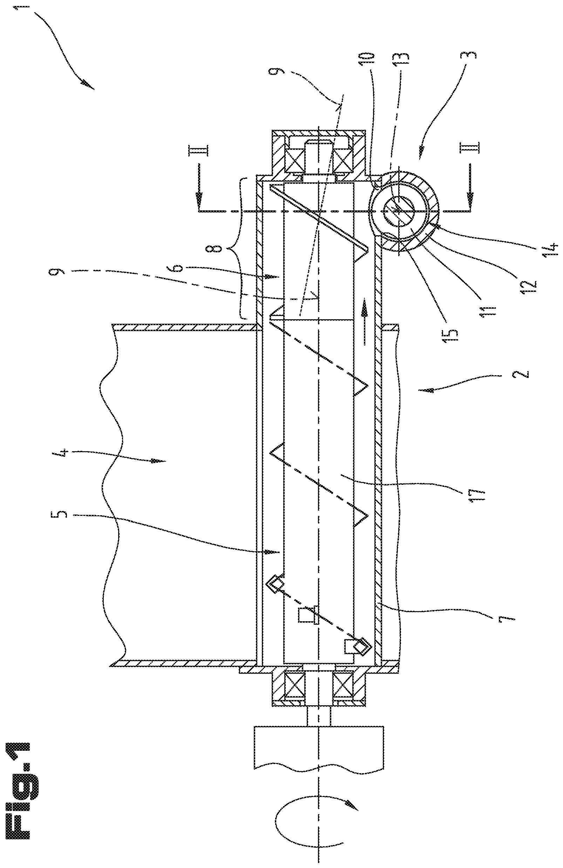

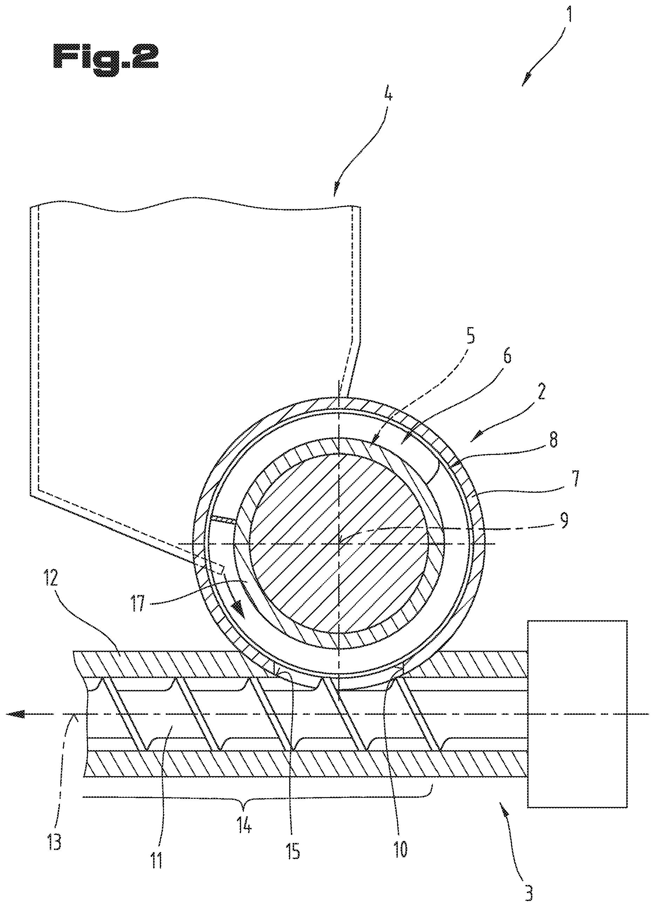

In den Fig. 1 und 2 ist eine Aufbereitungsanlage 1 für Kunststoffmaterial, insbesondere zur Aufbereitung von thermoplastischem Kunststoffmaterial für dessen Wiederverwertung vereinfacht und nur in Teilabschnitten dargestellt. Die Aufbereitungsanlage 1 wird zumeist auf einer ebenen, bevorzugt horizontal ausgerichteten Aufstandsfläche, wie z.B. einem Hallenboden, aufgestellt.

Grundsätzlich dient eine derartige Aufbereitungsanlage 1 dazu, zuerst das zumeist größer volumige Kunststoffmaterial auf eine entsprechende Stückgröße in einer Aufbereitungseinheit 2 zu einem in seiner Größe weiter verarbeitbaren Stückgut zu zerkleinern und anschließend in einer Plastifiziervorrichtung 3 aufzuschmelzen. Das zu zerkleinernde Kunststoffmaterial kann durch größeres Stückgut in den unterschiedlichsten Abmessungen und Größen, Folien oder aber auch bereits vorzerkleinertes Teilstückgut gebildet sein. Der von der Plastifiziervorrichtung 3 aufgeschmolzene und aus dieser austretende Schmelzestrom kann oder die austretenden Schmelzeströme können entweder nach deren Formgebung abgekühlt und für die spätere Verarbeitung granuliert werden oder einer direkt daran anschließenden Weiterverarbeitung und/oder entsprechenden Formgebung zugeführt werden. Die unmittelbar nachfolgende Formgebung kann in einem Extrusionsprozess oder einem Spritzgussprozess erfolgen, wobei hier noch die in der Schmelze enthaltene Wärmemenge nicht zuerst abgeführt und später erneut zugeführt werden muss.

Der Aufbereitungseinheit 2 ist zumeist eine Zufuhrvorrichtung 4 vorgeordnet, welche in bekannter Weise dazu dient, das zu verarbeitende und/oder aufzubereitende Kunststoffmaterial zu sammeln und der Aufbereitungseinheit 2 zuzuleiten. Die Zufuhr kann dabei durch das Eigengewicht selbsttätig und/oder mittels einer zusätzlichen Aufgabevorrichtung erfolgen, welche das noch nicht zerkleinerte Kunststoffmaterial zur Aufbereitungseinheit 2 hin bewegt.

Zumeist wird ein Zufuhrschacht zur Aufnahme und Weiterleitung an die Aufbereitungseinheit 2 eingesetzt.

Die Aufbereitungseinheit 2 umfasst eine Zerkleinerungsvorrichtung 5 und eine Fördervorrichtung 6, welche in einem bevorzugt rohrförmig ausgebildeten Gehäuse 7 aufgenommen sowie drehbar gelagert sind. Der zumeist rotatorische Antrieb kann mit zumindest einem nicht näher bezeichneten Antriebsmittel erfolgen. Die Fördervorrichtung 6 dient dazu, das zuvor zerkleinerte Kunststoffmaterial in Längsrichtung weiter zu einem später noch näher beschriebenen Übergabebereich zu fördern Die bevorzugt schneckenförmig ausgebildete Fördervorrichtung 6 ist in Förderrichtung gesehen der Zerkleinerungsvorrichtung 5 nachgeordnet. Weiters bildet die Fördervorrichtung 6 einen ersten Förderabschnitt 8 aus und definiert auch noch eine erste Längsachse 9. Im Bereich des ersten Förderabschnitts 8 ist die Förderrichtung mit einem Pfeil veranschaulicht. Zumeist wird die Fördervorrichtung 6 durch einen zentralen Wellenkörper gebildet, an dessen Außenumfang zumindest ein schneckenförmig bzw. wendelförmig ausgebildeter, gewundener Gang angeordnet oder ausgebildet ist. Der Wellenkörper kann seinerseits auch rohrförmig ausgebildet sein und in seinem Inneren auf einer Lagerachse abgestützt und/oder an dieser drehbar gelagert sein.

Die Ausbildung der Aufbereitungseinheit 2 mit deren Zerkleinerungsvorrichtung 5 sowie deren Fördervorrichtung 6 kann z.B. derart gewählt werden, wie dies in der EP 0 934 144 B1 näher beschrieben ist. Deshalb wird hier, um nötige Wiederholungen zu vermeiden, auf diese Beschreibung hingewiesen und Bezug genommen.

Der bei diesem Ausführungsbeispiel bevorzugt schneckenförmig bzw. wendelförmig ausgebildete Gang kann entweder über die Längserstreckung durchgehend und/oder über die Längserstreckung unterbrochen ausgebildet sein. Dieser muss nicht unbedingt bis ganz an das Ende der Fördervorrichtung 6 angeordnet sein, sondern kann dieser auch kurz davor enden. In diesem Fall können am zentralen Wellenkörper eigene, in radialer Richtung darüber vorragend ausgebildete sowie über den Umfang verteilt angeordnete Fortsätze vorgesehen sein. Diese Fortsätze können auch messerartig ausgebildet sein.

Der lichte Querschnitt des rohrförmig ausgebildeten Gehäuses 7 ist bevorzugt als Kreisfläche ausgebildet. Im Bereich der Zerkleinerungsvorrichtung 5 kann auch noch zumindest eine hin zur Zufuhrvorrichtung 4 geöffnete Zufuhröffnung im Gehäuse 7 angeordnet oder ausgebildet sein, durch welche das Kunststoffmaterial hin zur Zerkleinerungsvorrichtung 5 gelangt.

Zur Übergabe des zerkleinerten Kunststoffmaterials von der Aufbereitungseinheit 2, insbesondere der Fördervorrichtung 6, hin zur Plastifiziervorrichtung 3 ist in einem Endbereich des ersten Förderabschnitts 8 der Fördervorrichtung 6 zumindest eine Austrittsöffnung 10 vorgesehen. Bei diesem Ausführungsbeispiel ist die zumindest eine Austrittsöffnung 10 bodenseitig im Gehäuse 7 angeordnet. Es wäre aber auch möglich, die Austrittsöffnung 10 am stirnseitigen Ende der Fördervorrichtung 6 im Gehäuse 7 anzuordnen. Die Austrittsöffnung 10 könnte auch oberhalb und/oder seitlich der Fördervorrichtung 6 im Gehäuse 7 angeordnet sein. Die jeweilige Lage bzw. Anordnung der zumindest einen Austrittsöffnung 10 ist in Abhängigkeit von der Anordnung der nachgeordneten Plastifiziervorrichtung 3 zu wählen.

Die Plastifiziervorrichtung 3 kann zumindest eine Extruderschnecke 11 aufweisen, welche in einem Extrudergehäuse 12 aufgenommen sowie gelagert und mittels eines ebenfalls nicht näher bezeichneten weiteren Antriebsmittels in eine rotatorische Bewegung um eine weitere Längsachse 13 versetzt werden kann.

Die zumindest eine Extruderschnecke 11 definiert ihrerseits die weitere Längsachse 13 sowie einen weiteren Förderabschnitt 14. Zur Übernahme des zerkleinerten Kunststoffmaterials ist im Extrudergehäuse 12 zumindest eine Einfüllöffnung 15 vorgesehen. Bei diesem hier gezeigten Ausführungsbeispiel sind die im rohrförmigen Gehäuse 7 angeordnete Austrittsöffnung 10 und die im Extrudergehäuse 12 angeordnete Einfüllöffnung 15 unmittelbar aneinander anschließend angeordnet und bilden gemeinsam eine Verbindungsöffnung aus. Da die Austrittsöffnung 10 bodenseitig und die Plastifiziervorrichtung 3 mit ihrer Extruderschnecke 11 unterhalb des Gehäuses 7 angeordnet ist, befinden sich die beiden Öffnungen 10, 15 übereinander sowie in einer bevorzugt einander überdeckenden Lage. Wesentlich ist, dass die beiden Öffnungen 10, 15 miteinander in Strömungsverbindung für die Übergabe und Weiterleitung des zerkleinerten Kunststoffmaterials stehen. Dieser Übergang ist bevorzugt dicht auszubilden.

Es wäre aber auch noch möglich, dass die zumindest eine Austrittsöffnung 10 und die zumindest eine Einfüllöffnung 15 über ein oder mehrere nicht näher dargestellte Verbindungsstücke miteinander in Strömungsverbindung stehen und damit nicht unbedingt unmittelbar aneinander anschließen müssen. Das oder die Verbindungsstücke könnten z.B. durch Rohre mit den unterschiedlichsten Querschnitten und/oder Längserstreckung gebildet sein. Damit kann die Einfüllöffnung 15 von der Austrittsöffnung 10 distanziert und somit beabstandet sein.

Bedingt durch die in vertikaler Richtung zueinander versetzte übereinander Anordnung der Fördervorrichtung 6 und der Extruderschnecke 11 wird die gegenseitige relative Lage und Längserstreckung der beiden Längsachsen 9, 13 auf eine Projektion derselben auf eine Horizontalebene bei einer Ansicht von oben - also in Draufsicht - bezogen. Als Horizontalebene wird eine gedachte, jedoch nicht näher dargestellte Ebene angesehen. Im vorliegenden Ausführungsbeispiel sind die beiden Längsachsen 9, 13 im Bereich der Austrittsöffnung 10 und der Einfüllöffnung 15 einander kreuzend angeordnet. So kann bei einer möglichen Ausbildung ein bezüglich einer Projektion auf die Horizontalebene zwischen der ersten Längsachse 9 des ersten Förderabschnitts 8 der Fördervorrichtung 6 und der weiteren Längsachse 13 des weiteren Förderabschnitts 14 der Extruderschnecke 11 eingeschlossener Winkel 16 z.B. 90° betragen. Damit sind die beiden Längsachsen 9, 13 zueinander im rechten Winkel verlaufend ausgerichtet. Weitere davon unabhängige und gegebenenfalls für sich eigenständige Anordnungsmöglichkeiten bezüglich der Längsausrichtung der beiden Längsachsen 9, 13 zueinander, werden nachfolgend noch beschrieben.

Bei derartigen Aufbereitungsanlagen 1 wird zumeist die Zerkleinerungsvorrichtung 5 und die Fördervorrichtung 6 an einer gemeinsamen Aufbereitertrommel 17 angeordnet oder ausgebildet. So kann mit einem einzigen und gemeinsamen Antriebsmittel für beide Vorrichtungen das Auslangen gefunden werden.

Die Zerkleinerungsvorrichtung 5 kann in Richtung der ersten Längsachse 9 gesehen in einer bevorzugt schraubenlinienförmigen bzw. helixförmigen Anordnung entlang des Außenumfanges der Aufbereitertrommel 17 mehrere in radialer Richtung davon abstehende Messer aufweisen, welche in bekannter Weise mit einem sich über die Längserstreckung der Zufuhröffnung erstreckenden, bevorzugt durchgängigen Gegenmesser miteinander in kämmenden Eingriff stehen.

Weiters ist hier noch vorgesehen, dass die bevorzugt schneckenförmig ausgebildete Fördervorrichtung 6 im Bereich der Austrittsöffnung 10 aus dem rohrförmigen Gehäuse 7 eine Umlaufrichtung aufweist, welche bezüglich der Förderrichtung der zumindest einen Extruderschnecke 11 in dazu entgegengesetzter Richtung verläuft. Durch die zueinander gegenläufige Drehbewegung der bevorzugt schneckenförmig ausgebildeten Fördervorrichtung 6 und der Förderrichtung der Extruderschnecke 11 kann im Übergabebereich ein "Stopfen" und somit ein Überfüllen der Extruderschnecke 11 besser verhindert werden. Weiters kann damit aber auch ein gleichmäßigerer Füllgrad der Extruderschnecke 11 erreicht werden.

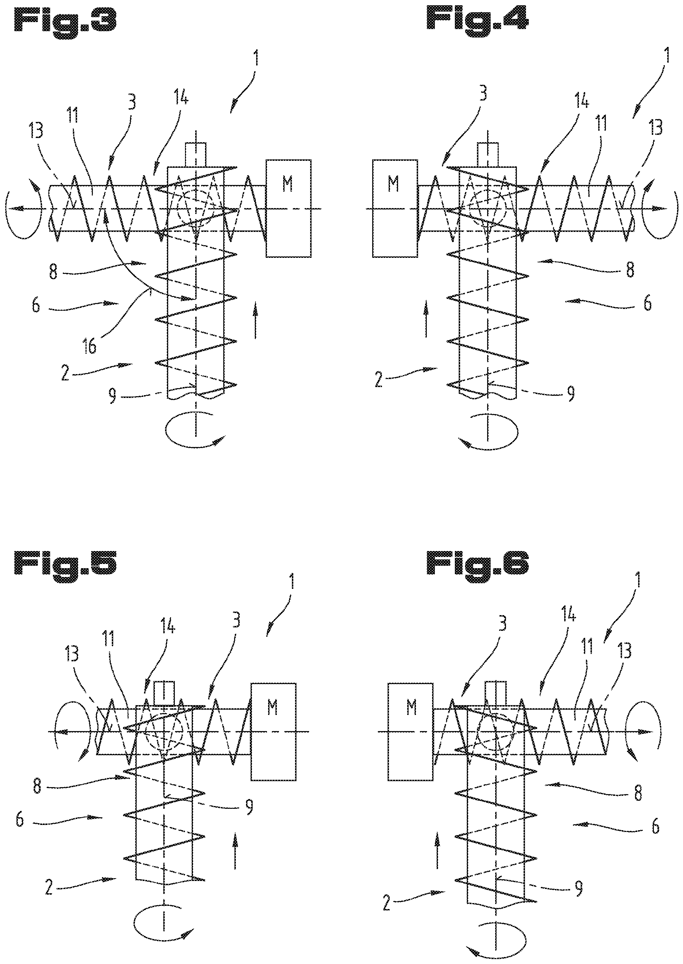

In den Fig. 3 bis 6 sind in Abhängigkeit von der jeweiligen Steigungsrichtung der hier schneckenförmig ausgebildeten Fördervorrichtung 6 und der Extruderschnecke 11 vereinfacht und schematisch jeweils die einzelnen Förderrichtungen sowie Umlaufrichtungen dargestellt. Weiters ist aus diesen schematischen Darstellungen noch zu ersehen, dass bezüglich einer Projektion auf die Horizontalebene der zwischen der ersten Längsachse 9 des ersten Förderabschnitts 8 der Fördervorrichtung 6 und der weiteren Längsachse 13 des weiteren Förderabschnitts 14 der Extruderschnecke 11 eingeschlossene Winkel 16 jeweils gleich dem rechten Winkel und somit von 90° gewählt ist. All die nachfolgend beschriebenen unterschiedlichen Ausbildungen und Anordnungen können jeweils für sich alleinig bei der zuvor detailliert beschriebenen Aufbereitungsanlage 1 eingesetzt werden. Die Angabe der Drehrichtungen bzw. der Umlaufrichtungen erfolgt stets bei einer Betrachtung des jeweiligen Förderabschnitts 8, 14 in Richtung einer Förderrichtung.

In der Fig. 3 ist eine erste und gegebenenfalls für sich eigenständige Anordnung der Fördervorrichtung 6 und der Extruderschnecke 11 zueinander gezeigt. Hier weist die schneckenförmig ausgebildete Fördervorrichtung 6 als auch die zumindest eine Extruderschnecke 11 jeweils eine rechtsgängige Steigung auf. Zur Erzielung der zur Förderrichtung der Extruderschnecke 11 entgegengesetzten Umlaufrichtung der Fördervorrichtung 6 sind sowohl die Fördervorrichtung 6 als auch die Extruderschnecke 11 entgegen dem Uhrzeigersinn anzutreiben bzw. angetrieben.

In der Fig. 4 ist eine zweite und gegebenenfalls für sich eigenständige Anordnung von Fördervorrichtung 6 und Extruderschnecke 11 zueinander gezeigt. Hier weist die schneckenförmig ausgebildete Fördervorrichtung 6 als auch die zumindest eine Extruderschnecke 11 jeweils eine linksgängige Steigungsrichtung auf. Zur Erzielung der zur Förderrichtung der Extruderschnecke 11 entgegengesetzten Umlaufrichtung der Fördervorrichtung 6 sind sowohl die Fördervorrichtung 6 als auch die Extruderschnecke 11 im Uhrzeigersinn anzutreiben bzw. angetrieben.

In der Fig. 5 ist eine dritte und gegebenenfalls für sich eigenständige Anordnung von Fördervorrichtung 6 und Extruderschnecke 11 zueinander gezeigt. Dabei weist die schneckenförmig ausgebildete Fördervorrichtung 6 eine rechtsgängige Steigung und die zumindest eine Extruderschnecke 11 eine linksgängige Steigung auf. Um auch hier wiederum die zueinander entgegengesetzt verlaufenden Bewegungen zu erzielen, ist die Fördervorrichtung 6 in deren Förderrichtung gesehen entgegen dem Uhrzeigersinn und die Extruderschnecke 11 in deren Förderrichtung gesehen im Uhrzeigersinn anzutreiben bzw. angetrieben.

Des Weiteren ist in der Fig. 6 eine vierte und gegebenenfalls für sich eigenständige Anordnung von Fördervorrichtung 6 und Extruderschnecke 11 zueinander gezeigt. Dabei weist die schneckenförmig ausgebildete Fördervorrichtung 6 eine linksgängige Steigung und die zumindest eine Extruderschnecke 11 eine rechtsgängige Steigung auf. Die Umlaufrichtung der Fördervorrichtung 6 ist hier in deren Förderrichtung gesehen im Uhrzeigersinn gewählt, wobei die Umlaufrichtung der Extruderschnecke 11 in deren Förderrichtung gesehen entgegen dem Uhrzeigersinn gewählt ist.

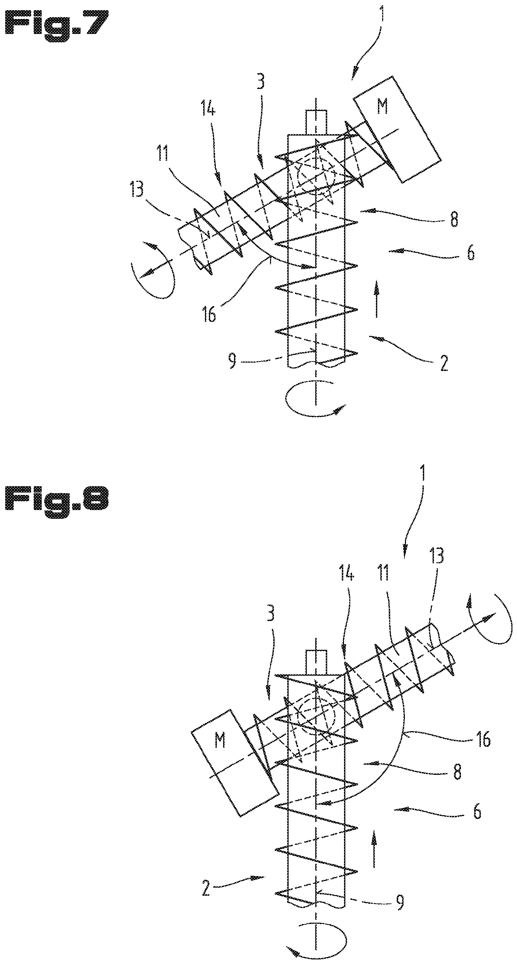

In den Fig. 7 und 8 ist weiters noch gezeigt, dass eine zu der zuvor in den Fig. 3 bis 6 dazu unterschiedliche Ausrichtung der beiden Längsachsen 9, 13 zueinander noch möglich ist. Dabei ist bezüglich einer Projektion auf die Horizontalebene der zwischen der ersten Längsachse 9 des ersten Förderabschnitts 8 der Fördervorrichtung 6 und der weiteren Längsachse 13 des weiteren Förderabschnitts 14 der Extruderschnecke 11 eingeschlossene Winkel 16 ungleich dem rechten Winkel gewählt. Diese hier beschriebenen Anordnungsmöglichkeiten können mit all den zuvor beschriebenen Ausbildungen in entsprechender Weise beliebig miteinander kombiniert werden. Durch die vom rechten Winkel abweichende Längsausrichtung der beiden Längsachsen 9, 13 zueinander kann in Abhängigkeit vom jeweiligen Steigungswinkel sowie der Steigungsrichtung des Schneckengewindes oder der Gewindeflügel der Fördervorrichtung 6 sowie der Extruderschnecke 11 die Ausrichtung sowie die relative Lage der Schneckengänge zueinander im Bereich des Kreuzungspunktes festgelegt werden.

In der Fig. 7 ist gezeigt, dass bei einer Projektion auf die Horizontalebene der zwischen der ersten Längsachse 9 des ersten Förderabschnitts 8 der Fördervorrichtung 6 und der weiteren Längsachse des weiteren Förderabschnitts 14 der Extruderschnecke 11 eingeschlossene Winkel 16 ein spitzer Winkel ist. Der spritze Winkel wird bevorzugt in einem Bereich ausgewählt, dessen unterer Wert z.B. 5° bis 10° beträgt und dessen oberer Wert z.B. 70° bis 85° beträgt. Es können bevorzugt Werte des Winkels 16 in einem Bereich zwischen 30° und 60° gewählt werden.

Im Gegensatz dazu ist in der Fig. 8 gezeigt, dass bei gleicher Projektionsrichtung der Winkel 16 zwischen den beiden Längsachsen 9, 13 im Bereich der beiden Förderabschnitte 8, 14ein stumpfer Winkel ist und somit einen Wert von größer als 90° aufweist. Der stumpfe Winkel wird bevorzugt in einem Bereich ausgewählt, dessen unterer Wert z.B. 95° bis 110° beträgt und dessen oberer Wert z.B. 160° bis 175° beträgt. Es können bevorzugt Werte des Winkels 16 in einem Bereich zwischen 120° und 150° gewählt werden.

Die zuvor angegebenen unteren und oberen Grenzwerte des spitzen Winkels 16 können auch noch kleiner als 5°oder auch größer als 85° gewählt werden. Der stumpfe Winkel 16 kann auch einen unteren Grenzwert kleiner 95° oder einen oberen Grenzwert größer 175° aufweisen.

Eine bevorzugte Ausführungsform sieht vor, dass im Kreuzungsbereich zwischen den beiden Förderabschnitten 8, 14 die beiden Längsachsen 9, 13 derart zueinander winkelig ausgerichtet werden, dass der Steigungswinkel des Schneckengewindes oder der Gewindeflügel der Fördervorrichtung 6 parallel bezüglich des Schneckengewindes oder der Gewindeflügel der Extruderschnecke 11 verläuft. Damit kann eine zusätzliche Scherwirkung im Übergabebereich zwischen der Fördervorrichtung 6 und der Extruderschnecke 11 der Plastifiziervorrichtung 3 auf das zerkleinerte Kunststoffmaterial verringert oder gänzlich vermieden werden.

Bevorzugt sind die erste Längsachse 9 im Bereich des ersten Förderabschnitts 8 der Fördervorrichtung 6 sowie die weitere Längsachse 13 im Bereich des weiteren Förderabschnitts 14 der zumindest einen Extruderschnecke 11 jeweils in einer Horizontalebene verlaufend angeordnet. Die beiden Horizontalebenen sind in Vertikalrichtung zueinander beabstandet und auch parallel zueinander verlaufend ausgerichtet. Der Vertikalabstand zwischen den beiden Horizontalebenen kann ausgehend vom Wert 0 (Null) jeden beliebigen endlichen Wert aufweisen. Dieser Abstandswert ist abhängig von den Abmessungen der Fördervorrichtung 6 und der Plastifiziervorrichtung 3 sowie deren räumliche Anordnung zueinander.

Unabhängig davon wäre es aber auch noch möglich, wie dies in der Fig. 1 in einer strichlierten Linie angedeutet ist, dass z.B. die Längsachse 13 der Extruderschnecke 11 in der Horizontalebene verlaufend, jedoch die erste Längsachse 9 zumindest der Fördervorrichtung 6 im Bereich des ersten Förderabschnitts 8 in deren Förderrichtung gesehen abfallen hin zur zumindest einen Extruderschnecke 11 ausgerichtet ist. Damit kann in einem geringen Ausmaß die Förderbewegung des zerkleinerten Kunststoffmaterials erleichtert werden.

Die beiden Längsachsen 9, 13 können auch als Drehachsen für diese Bauteile bezeichnet werden. Die Fördervorrichtung 6 mit ihrer äußeren Umhüllenden im Bereich von deren Förderschnecke oder deren Förderorganen wird bevorzugt in einem geringen Abstand von der äußeren Umhüllenden der Extruderschnecke 11 angeordnet.

Die Ausführungsbeispiele zeigen mögliche Ausführungsvarianten der Aufbereitungsanlage 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus der Aufbereitungsanlage 1 diese bzw. deren Bestandteile teilweise unmaßstäblich und/oder vergrößert und/oder verkleinert dargestellt wurden.

### Bezugszeichenaufstellung

- 1: Aufbereitungsanlage
- 2: Aufbereitungseinheit
- 3: Plastifiziervorrichtung
- 4: Zufuhrvorrichtung
- 5: Zerkleinerungsvorrichtung
- 6: Fördervorrichtung
- 7: Gehäuse
- 8: erster Förderabschnitt
- 9: erste Längsachse
- 10: Austrittsöffnung
- 11: Extruderschnecke
- 12: Extrudergehäuse
- 13: weitere Längsachse
- 14: weiterer Förderabschnitt
- 15: Einfüllöffnung
- 16: Winkel
- 17: Aufbereitertrommel

## Patentansprüche

1. Aufbereitungsanlage (1) für Kunststoffmaterial, insbesondere zur Aufbereitung von thermoplastischem Kunststoffmaterial für dessen Wiederverwertung, umfassend
- eine Zufuhrvorrichtung (4),
- eine Aufbereitungseinheit (2) mit einer Zerkleinerungsvorrichtung (5), einer bevorzugt schneckenförmig ausgebildeten Fördervorrichtung (6), einem rohrförmig ausgebildeten Gehäuse (7), und mit zumindest einem Antriebsmittel für die Zerkleinerungsvorrichtung (5) sowie die Fördervorrichtung (6),
- wobei die Zerkleinerungsvorrichtung (5) und die in Förderrichtung an die Zerkleinerungsvorrichtung (5) in axialer Richtung daran anschließende Fördervorrichtung (6) in dem rohrförmigen Gehäuse (7) aufgenommen sowie drehbar gelagert sind,
- und wobei die Fördervorrichtung (6) einen ersten Förderabschnitt (8) mit einer ersten Längsachse (9) definiert,
- und wobei das Gehäuse (7) im Bereich der Zerkleinerungsvorrichtung (5) zumindest eine hin zur Zufuhrvorrichtung (4) geöffnete Zufuhröffnung und in einem Endbereich des Förderabschnitts (8) der Fördervorrichtung (6) eine Austrittsöffnung (10) aufweist,
- eine Plastifiziervorrichtung (3) mit zumindest einer in einem Extrudergehäuse (12) aufgenommenen Extruderschnecke (11) und einem weiteren Antriebsmittel für die zumindest eine Extruderschnecke (11), und die zumindest eine Extruderschnecke (11) eine weitere Längsachse (13) sowie einen weiteren Förderabschnitt (14) definiert,
- wobei in Förderrichtung gesehen die Plastifiziervorrichtung (3) der Aufbereitungseinheit (2) nachgeordnet ist,
- und wobei im Extrudergehäuse (12) eine Einfüllöffnung (15) angeordnet ist, und die Einfüllöffnung (15) und die im Gehäuse (7) angeordnete Austrittsöffnung (10) unmittelbar aneinander anschließend angeordnet sind, eine gemeinsame Verbindungsöffnung ausbilden und miteinander in Strömungsverbindung stehen,
- und wobei bezüglich einer Projektion auf eine Horizontalebene der erste Förderabschnitt (8) der Fördervorrichtung (6) mit seiner ersten Längsachse (9) und der weitere Förderabschnitt (14) der zumindest einen Extruderschnecke (11) mit seiner weiteren Längsachse (13) im Bereich der Austrittsöffnung (10) und der Einfüllöffnung (15) einander kreuzend ausgerichtet sind,
**dadurch gekennzeichnet,**
- **dass** die bevorzugt schneckenförmig ausgebildete Fördervorrichtung (6) im Bereich der Austrittsöffnung (10) aus dem Gehäuse (7) eine Umlaufrichtung aufweist, welche bezüglich der Förderrichtung der zumindest einen Extruderschnecke (11) in dazu entgegengesetzter Richtung verläuft.

2. Aufbereitungsanlage (1) nach Anspruch 1, **dadurch gekennzeichnet, dass** die Zerkleinerungsvorrichtung (5) und die Fördervorrichtung (6) an einer gemeinsamen Aufbereitertrommel (17) angeordnet oder ausgebildet sind.

3. Aufbereitungsanlage (1) nach Anspruch 1 oder 2, **dadurch gekennzeichnet, dass** bezüglich einer Projektion auf eine Horizontalebene ein zwischen der ersten Längsachse (9) des ersten Förderabschnitts (8) der Fördervorrichtung (6) und der weiteren Längsachse (13) des weiteren Förderabschnitts (14) der Extruderschnecke (11) eingeschlossener Winkel (16) gleich dem rechten Winkel gewählt ist.

4. Aufbereitungsanlage (1) nach Anspruch 1 oder 2, **dadurch gekennzeichnet, dass** bezüglich einer Projektion auf eine Horizontalebene ein zwischen der ersten Längsachse (9) des ersten Förderabschnitts (8) der Fördervorrichtung (6) und der weiteren Längsachse (13) des weiteren Förderabschnitts (14) der Extruderschnecke (11) eingeschlossener Winkel (16) ungleich dem rechten Winkel gewählt ist.

5. Aufbereitungsanlage (1) nach einem der Ansprüche 1, 2 oder 4, **dadurch gekennzeichnet, dass** bezüglich einer Projektion auf eine Horizontalebene ein zwischen der ersten Längsachse (9) des ersten Förderabschnitts (8) der Fördervorrichtung (6) und der weiteren Längsachse (13) des weiteren Förderabschnitts (14) der Extruderschnecke (11) eingeschlossener Winkel (16) ein spitzer Winkel ist.

6. Aufbereitungsanlage (1) nach einem der Ansprüche 1, 2 oder 4, **dadurch gekennzeichnet, dass** bezüglich einer Projektion auf eine Horizontalebene ein zwischen der ersten Längsachse (9) des ersten Förderabschnitts (8) der Fördervorrichtung (6) und der weiteren Längsachse (13) des weiteren Förderabschnitts (14) der Extruderschnecke (11) eingeschlossener Winkel (16) ein stumpfer Winkel ist.

7. Aufbereitungsanlage (1) nach einem der vorhergehenden Ansprüche, **dadurch gekennzeichnet, dass** die erste Längsachse (9) im Bereich des ersten Förderabschnitts (8) der Fördervorrichtung (6) und die weitere Längsachse (13) im Bereich des weiteren Förderabschnitts (14) der zumindest einen Extruderschnecke (11) jeweils in einer Horizontalebene verlaufend angeordnet sind.

8. Aufbereitungsanlage (1) nach einem der Ansprüche 1 bis 6, **dadurch gekennzeichnet, dass** die erste Längsachse (9) im Bereich des ersten Förderabschnitts (8) der Fördervorrichtung (6) in deren Förderrichtung gesehen abfallend hin zur zumindest einen Extruderschnecke (11) der Plastifiziervorrichtung (3) ausgerichtet ist.

9. Aufbereitungsanlage (1) nach einem der Ansprüche 1 bis 8, **dadurch gekennzeichnet, dass** die schneckenförmig ausgebildete Fördervorrichtung (6) eine rechtsgängige Steigung und die zumindest eine Extruderschnecke (11) ebenfalls eine rechtsgängige Steigung aufweist und sowohl die Fördervorrichtung (6) als auch die Extruderschnecke (11) jeweils in deren Förderrichtung gesehen entgegen dem Uhrzeigersinn angetrieben sind.

10. Aufbereitungsanlage (1) nach einem der Ansprüche 1 bis 8, **dadurch gekennzeichnet, dass** die schneckenförmig ausgebildete Fördervorrichtung (6) eine linksgängige Steigung und die zumindest eine Extruderschnecke (11) ebenfalls eine linksgängige Steigung aufweist und sowohl die Fördervorrichtung (6) als auch die Extruderschnecke (11) jeweils in deren Förderrichtung gesehen im Uhrzeigersinn angetrieben sind.

11. Aufbereitungsanlage (1) nach einem der Ansprüche 1 bis 8, **dadurch gekennzeichnet, dass** die schneckenförmig ausgebildete Fördervorrichtung (6) eine rechtsgängige Steigung und die zumindest eine Extruderschnecke (11) eine linksgängige Steigung aufweist und die Fördervorrichtung (6) in deren Förderrichtung gesehen entgegen dem Uhrzeigersinn und die Extruderschnecke (11) in deren Förderrichtung gesehen im Uhrzeigersinn angetrieben ist.

12. Aufbereitungsanlage (1) nach einem der Ansprüche 1 bis 8, **dadurch gekennzeichnet, dass** die schneckenförmig ausgebildete Fördervorrichtung (6) eine linksgängige Steigung und die zumindest eine Extruderschnecke (11) eine rechtsgängige Steigung aufweist und die Fördervorrichtung (6) in deren Förderrichtung gesehen im Uhrzeigersinn und die Extruderschnecke (11) in deren Förderrichtung gesehen entgegen dem Uhrzeigersinn angetrieben ist.

## Claims

1. A processing plant (1) for plastic material, in particular for processing thermoplastic material for the recycling thereof, comprising
- a feed device (4),
- a processing unit (2) having a comminuting device (5), a preferably spirally designed conveying device (6), a tubularly designed housing (7), and having at least one drive means for the comminuting device (5) and the conveying device (6),
- wherein the comminuting device (5) and the conveying device (6) adjoining the comminuting device (5) in the direction of conveyance in the axial direction are accommodated as well as rotatably mounted in the tubular housing (7),
- and wherein the conveying device (6) defines a first conveying section (8) having a first longitudinal axis (9),
- and wherein the housing (7) comprises, in the region of the comminuting device (5), at least one feed opening open towards the feed device (4) and, in an end region of the conveying section (8) of the conveying device (6), a discharge opening (10),
- a plasticizing device (3) having at least one extruder screw (11) accommodated in an extruder housing (12) and a further drive means for the at least one extruder screw (11), and the at least one extruder screw (11) defines a further longitudinal axis (13) and a further conveying section (14),
- wherein, as viewed in the direction of conveyance, the plasticizing device (3) is arranged downstream of the processing unit (2),
- and wherein a fill opening (15) is arranged in the extruder housing (12), and the fill opening (15) and the discharge opening (10) arranged in the housing (7) are arranged so as to directly adjoin one another, form a common connecting opening and are fluidically connected to one another,
- and wherein, with respect to a projection onto a horizontal plane, the first conveying section (8) of the conveying device (6), with its first longitudinal axis (9), and the further conveying section (14) of the at least one extruder screw (11), with its further longitudinal axis (13), are oriented such that they intersect in the region of the discharge opening (10) and the fill opening (15),
**characterized in**
- **that** the preferably spirally designed conveying device (6), in the region of the discharge opening (10) from the housing (7), comprises a direction of circulation which, with respect to the direction of conveyance of the at least one extruder screw (11), runs in the direction opposite thereto.

2. The processing plant (1) according to claim 1, **characterized in that** the comminuting device (5) and the conveying device (6) are arranged or formed on a common processing drum (17).

3. The processing plant (1) according to claim 1 or 2, **characterized in that**, with respect to a projection towards a horizontal plane, an angle (16) enclosed between the first longitudinal axis (9) of the first conveying section (8) of the conveying device (6) and the further longitudinal axis (13) of the further conveying section (14) of the extruder screw (11) is selected to be equal to a right angle.

4. The processing plant (1) according to claim 1 or 2, **characterized in that**, with respect to a projection towards a horizontal plane, an angle (16) enclosed between the first longitudinal axis (9) of the first conveying section (8) of the conveying device (6) and the further longitudinal axis (13) of the further conveying section (14) of the extruder screw (11) is selected to be unequal to a right angle.

5. The processing plant (1) according to one of claims 1, 2 or 4, **characterized in that**, with respect to a projection towards a horizontal plane, an angle (16) enclosed between the first longitudinal axis (9) of the first conveying section (8) of the conveying device (6) and the further longitudinal axis (13) of the further conveying section (14) of the extruder screw (11) is an acute angle.

6. The processing plant (1) according to one of claims 1, 2 or 4, **characterized in that**, with respect to a projection towards a horizontal plane, an angle (16) enclosed between the first longitudinal axis (9) of the first conveying section (8) of the conveying device (6) and the further longitudinal axis (13) of the further conveying section (14) of the extruder screw (11) is an obtuse angle.

7. The processing plant (1) according to one of the preceding claims, **characterized in that** the first longitudinal axis (9) in the region of the first conveying section (8) of the conveying device (6) and the further longitudinal axis (13) in the region of the further conveying section (14) of the at least one extruder screw (11) are each arranged running in a horizontal plane.

8. The processing plant (1) according to one of claims 1 to 6, **characterized in that** the first longitudinal axis (9) in the region of the first conveying section (8) of the conveying device (6), as viewed in its direction of conveyance, is oriented such that it slopes down towards the at least one extruder screw (11) of the plasticizing device (3).

9. The processing plant (1) according to one of claims 1 to 8, **characterized in that** the spirally designed conveying device (6) has a right-hand pitch and the at least one extruder screw (11) likewise has a right-hand pitch, and both the conveying device (6) and the extruder screw (11), each as viewed in the direction of conveyance thereof, are driven counterclockwise.

10. The processing plant (1) according to one of claims 1 to 8, **characterized in that** the spirally designed conveying device (6) has a left-hand pitch and the at least one extruder screw (11) likewise has a left-hand pitch, and both the conveying device (6) and the extruder screw (11), each as viewed in the direction of conveyance thereof, are driven clockwise.

11. The processing plant (1) according to one of claims 1 to 8, **characterized in that** the spirally designed conveying device (6) has a right-hand pitch and the at least one extruder screw (11) has a left-hand pitch, and the conveying device (6), as viewed in its direction of conveyance, is driven counterclockwise, and the extruder screw (11), as viewed in its direction of conveyance, is driven clockwise.

12. The processing plant (1) according to one of claims 1 to 8, **characterized in that** the spirally designed conveying device (6) has a left-hand pitch and the at least one extruder screw (11) has a right-hand pitch, and the conveying device (6), as viewed in its direction of conveyance, is driven clockwise, and the extruder screw (11), as viewed in its direction of conveyance, is driven counterclockwise.

## Revendications

1. Installation de traitement (1) pour une matière plastique, plus particulièrement pour le traitement d'une matière plastique thermoplastique afin de la recycler, comprenant :
- un dispositif d'alimentation (4),
- une unité de traitement (2) avec un dispositif de broyage (5), un dispositif de convoyage (6), conçu de préférence sous la forme d'une vis sans fin, un boîtier (7) de forme tubulaire, et avec au moins un moyen d'entraînement pour le dispositif de broyage (5) ainsi que le dispositif de convoyage (6),
- le dispositif de broyage (5) et le dispositif de convoyage (6), se raccordant, dans la direction axiale, dans la direction de convoyage, au dispositif de broyage (5), étant logés dans le boîtier tubulaire (7) et de manière rotative,
- et le dispositif de convoyage (6) définissant une première portion de convoyage (8) avec un premier axe longitudinal (9),
- et le boîtier (7) comprenant, au niveau du dispositif de broyage (5) au moins une ouverture d'alimentation ouverte en direction du dispositif d'alimentation (4) et, dans une partie d'extrémité de la portion de convoyage (8) du dispositif de convoyage (6), une ouverture de sortie (10),
- un dispositif de plastification (3) avec au moins une vis sans fin d'extrudeuse (11) logée dans un boîtier d'extrudeuse (12) et un autre moyen d'entraînement pour l'au moins une vis sans fin d'extrudeuse (11) et l'au moins une vis sans fin d'extrudeuse (11) définissant un autre axe longitudinal (13) ainsi qu'une autre portion de convoyage (14),
- moyennant quoi, vu dans la direction de convoyage, le dispositif de plastification (3) est disposé en aval de l'unité de traitement (2),
- et, dans le boîtier d'extrudeuse (12), une ouverture de remplissage (15) étant disposée et l'ouverture de remplissage (15) et l'ouverture de sortie (10) disposée dans le boîtier (7) étant disposées de façon à se raccorder directement entre elles, formant une ouverture de liaison commune et étant en liaison d'écoulement entre elles,
- et par rapport à une projection sur un plan horizontal, la première portion de convoyage (8) du dispositif de convoyage (6) se croise avec son premier axe longitudinal (9) et l'autre portion de convoyage (14) de l'au moins une vis sans fin d'extrudeuse (11) se croise avec son autre axe longitudinal (13) au niveau de l'ouverture de sortie (10) et de l'ouverture de remplissage (15),
**caractérisée en ce que**
- le dispositif de convoyage (6), conçu de préférence sous la forme d'une vis sans fin, comprend, au niveau de l'ouverture de sortie (10) hors du boîtier (7), une direction circonférentielle qui s'étend dans une direction opposée par rapport à la direction de convoyage de l'au moins une vis sans fin d'extrudeuse (11).

2. Installation de traitement (1) selon la revendication 1, **caractérisée en ce que** le dispositif de broyage (5) et le dispositif de convoyage (6) sont disposés ou réalisés sur un tambour de traitement commun (17).

3. Installation de traitement (1) selon la revendication 1 ou 2, **caractérisée en ce que**, par rapport à une projection sur un plan horizontal, un angle (16) formé entre le premier axe longitudinal (9) de la première portion de convoyage (8) du dispositif de convoyage (6) et l'autre axe longitudinal (13) de l'autre portion de convoyage (14) de la vis sans fin d'extrudeuse (11) est choisi de façon à être égal à l'angle droit.

4. Installation de traitement (1) selon la revendication 1 ou 2, **caractérisée en ce que**, par rapport à une projection sur un plan horizontal, un angle (16) formé entre le premier axe longitudinal (9) de la première portion de convoyage (8) du dispositif de convoyage (6) et l'autre axe longitudinal (13) de l'autre portion de convoyage (14) de la vis sans fin d'extrudeuse (11) est choisi de façon à être différent de l'angle droit.

5. Installation de traitement (1) selon l'une des revendications 1, 2 ou 4, **caractérisée en ce que**, par rapport à une projection sur un plan horizontal, un angle (16) formé entre le premier axe longitudinal (9) de la première portion de convoyage (8) du dispositif de convoyage (6) et l'autre axe longitudinal (13) de l'autre portion de convoyage (14) de la vis sans fin d'extrudeuse (11) est un angle aigu.

6. Installation de traitement (1) selon l'une des revendications 1, 2 ou 4, **caractérisée en ce que**, par rapport à une projection sur un plan horizontal, un angle (16) formé entre le premier axe longitudinal (9) de la première portion de convoyage (8) du dispositif de convoyage (6) et l'autre axe longitudinal (13) de l'autre portion de convoyage (14) de la vis sans fin d'extrudeuse (11) est un angle obtus.

7. Installation de traitement (1) selon l'une des revendications précédentes, **caractérisée en ce que** le premier axe longitudinal (9), au niveau de la première portion de convoyage (8) du dispositif de convoyage (6) et l'autre axe longitudinal (13), au niveau de l'autre portion de convoyage (14) de l'au moins une vis sans fin d'extrudeuse (11), sont disposés de façon à s'étendre chacun dans un plan horizontal.

8. Installation de traitement (1) selon l'une des revendications 1 à 6, **caractérisée en ce que** le premier axe longitudinal (9), au niveau de la première portion de convoyage (8) du dispositif de convoyage (6), vu dans sa direction de convoyage, est orienté de manière descendante vers au moins une vis sans fin d'extrudeuse (11) du dispositif de plastification (3).

9. Installation de traitement (1) selon l'une des revendications 1 à 8, **caractérisée en ce que** le dispositif de convoyage (6), conçu sous la forme d'une vis sans fin, présente un pas à droite et l'au moins une vis sans fin d'extrudeuse (11) présente également un pas à droite et le dispositif de convoyage (6) ainsi que la vis sans fin d'extrudeuse (11) sont entraînés respectivement, vu dans leur direction de convoyage, dans le sens anti-horaire.

10. Installation de traitement (1) selon l'une des revendications 1 à 8, **caractérisée en ce que** le dispositif de convoyage (6), conçu sous la forme d'une vis sans fin, présente un pas à gauche et l'au moins une vis sans fin d'extrudeuse (11) présente également un pas à gauche et le dispositif de convoyage (6) ainsi que la vis sans fin d'extrudeuse (11) sont entraînés respectivement, vu dans leur direction de convoyage, dans le sens horaire.

11. Installation de traitement (1) selon l'une des revendications 1 à 8, **caractérisée en ce que** le dispositif de convoyage (6), conçu sous la forme d'une vis sans fin, présente un pas à droite et l'au moins une vis sans fin d'extrudeuse (11) présente également un pas à gauche et le dispositif de convoyage (6) ainsi que la vis sans fin d'extrudeuse (11) sont entraînés respectivement, vu dans leur direction de convoyage, dans le sens horaire.

12. Installation de traitement (1) selon l'une des revendications 1 à 8, **caractérisée en ce que** le dispositif de convoyage (6), conçu sous la forme d'une vis sans fin, présente un pas à gauche et l'au moins une vis sans fin d'extrudeuse (11) présente également un pas à droite et le dispositif de convoyage (6) ainsi que la vis sans fin d'extrudeuse (11) sont entraînés respectivement, vu dans leur direction de convoyage, dans le sens anti-horaire.
